# FASCICULE DE BREVET EUROPEEN

(11) **EP 1 952 311 B1**
(45) Date de publication et mention de la délivrance du brevet: **03.03.2010**
(21) Numéro de dépôt: 06807811.2
(22) Date de dépôt: 13.11.2006
(51) Int. Cl.: G06K 19/06

(54) **SUPPORT DE DONNEES, PIECE D 'IDENTITE ET PROCEDE DE SECURISATION CORRESPONDANT**
DATENMEDIUM, IDENTITÄTSDOKUMENT UND ENTSPRECHENDES SICHERHEITS-SCHUTZVERFAHREN
DATA MEDIUM, IDENTITY DOCUMENT AND CORRESPONDING SECURITY-PROTECTION METHOD

(30) Priorité: 15.11.2005 FR 0511581
(43) Date de publication de la demande: 06.08.2008
(73) Titulaire: Gemalto SA, 92190 Meudon (FR)
(72) Inventeur: LESUR, Jean-Luc, F-83149 Bras (FR)
(86) Numéro de dépôt international: PCT/EP2006/068407
(87) Numéro de publication internationale: WO 2007/057375

(56) Documents cités:
- EP-A- 0 219 012
- EP-A- 0 230 497
- US-A1- 2004 198 858

## Description

L'invention concerne la sécurité de supports d'informations ou données qui ne doivent pas pouvoir être altérées, ni modifiées, afin d'éviter que ces supports puissent être frauduleusement utilisés.

Un problème que l'on veut ici résoudre concerne la sécurité des données de personnalisation inscrits, rapportés ou incorporés à l'endroit de tels supports.

Il faut en effet éviter que ces données, personnalisées en fonction du porteur, typiquement une personne physique ou un groupe de telles personnes, puissent être modifiées, altérées ou supprimées, ou du moins que de telles opérations posent des problèmes de réalisation.

La demande de brevet EP-A-0 219 012 concerne un support de données comprenant une couche transparente lenticulaire perméable à un faisceau laser. Des images sont réalisée à travers le volume de la couche transparente lenticulaire au moyen du faisceau laser, de sorte que des premières images sont visibles lorsque la carte est inclinée d'un angle prédeterminé. Si la carte est encore inclinée dans une direction ou une autre, d'autres images réalisée par laser apparaissent. Cette solution permet d'éviter à un faudeur d'enlever la couche lenticulaire et de modifier les images car il est ensuite très difficile pour lui de replacer une couche lenticulaire de telle sorte qu'elle soit parfaitement registrée avec les images à visualiser.

Une solution proposée ici consiste en ce que le support de données concerné, qui porte les données à sécuriser, comprenne au moins une première et une deuxième parties assemblées entre elles, chacune présentant une face extérieure tournée vers l'environnement extérieur et une face intérieure cachée, l'une au moins de ces première et deuxième parties portant, à distance desdites faces extérieures, des marquages cachés de données de personnalisation. En outre ces première et seconde parties du support sont toutes deux opaques vis-à-vis de la transmission à travers elles d'un rayonnement laser susceptible de modifier lesdits marquages cachés.

On va ainsi restreindre notablement les risques de fraude.

Un tel support d'informations sécurisées peut en particulier être utilisé comme pièce d'identité électronique, telle que carte d'identité ou feuille d'un passeport, badge d'accès, carte bancaire, badge d'identification.

Dans le domaine de ces supports sécurisés, tels les cartes ou badges (on emploiera ici indifféremment les deux termes), il est connu de les revêtir, sur au moins une face, d'au moins une couche de revêtement typiquement en une matière souple et en un plastique différent de celui du corps de la carte.

On a constaté qu'il est alors, la plupart du temps, possible, sans que cela soit ultérieurement décelable, de peler le film et d'avoir alors un accès direct aux informations ou données qui ont été préalablement portées sur le support.

Or, si ces données sont personnelles et, comme ici, ne doivent pas être modifiées ou supprimées (en particulier rendues non visibles), ceci pose un problème, dès lors qu'il y a alors possibilité de falsification.

Un objet de l'invention est donc d'éviter cette situation, la caractéristique précitée allant dans ce sens.

En liaison avec cela, il est par ailleurs conseillé:
- que l'opacité à la lumière naturelle des marquages et de leur support, ou au moins de ses dites première et deuxième parties, soient adaptés pour que, sous cette lumière naturelle, une partie au moins desdits marquages cachés ne soit pas visible par réflexion, mais soit par contre visible par transparence à travers le support,
- et/ou que ledit support comprenne en outre d'autres marquages de données de personnalisation visibles par réflexion sous lumière naturelle,
- et/ou que ce support comprenne une première partie de marquages de données de personnalisation propres à son porteur, inscrite dans ou sur ce support, et visible, depuis l'environnement extérieur et par l'oeil humain, par réflexion sous une première lumière visible, et une deuxième partie de marquages de données de personnalisation, qui correspond auxdits marquages cachés, et qui soit visible, toujours depuis l'environnement extérieur et par l'oeil humain, par transparence à travers le support et/ou sous une seconde lumière spécifique différente de celle qui rend visible ladite première partie des marquages, l'opacité audit éclairage concerné desdites première et deuxième parties des marquages et du support, ou au moins desdites première et/ou deuxième parties de ce support, étant adaptés pour cela,
- et/ou que les marquages cachés de données de personnalisation soient portés par l'une au moins desdites première et deuxième parties du support, par l'intermédiaire d'au moins une couche intérieure cachée,
où sont inscrits ces marquages et qui est transparente et/ou réactive à un faisceau laser et/ou adaptée au marquage D2T2 et/ou jet d'encre et/ou à d'autres techniques de personnalisation.

Favorablement, dans cette situation, le caractère plus ou moins opaque du support, les marquages cachés et la seconde lumière spécifique seront adaptés pour que la révélation de ces marquages cachés corresponde à l'une au moins parmi les situations suivantes : révélation par transparence à travers le support, révélation par réflexion par une lumière dans une gamme prédéterminée de longueur(s) d'onde(s) et/ou d'intensité(s) différente(s) de celle(s) de ladite première lumière.

Pour une commodité d'utilisation, une réduction des coûts de fabrication et une application en grande série, la révélation par transparence, à contre-jour, paraît une solution privilégiée.

En relation avec tout ou partie des buts précités, on favorisera par ailleurs les conditions de fabrication de la carte en prévoyant, de préférence:
- que les marquages de données de personnalisation et/ou le(s) matériau(x) desdites première et deuxième parties du support soient adaptées pour que cesdites première et deuxième parties soient soudées intimement l'une à l'autre du côté de leurs dites faces intérieures respectives,
- et/ou que le matériau de la première partie ou de la deuxième partie du support présente sensiblement la même température de fusion que celui de l'autre partie de corps de carte,
- et/ou que le matériau de la première partie du support soit identique ou chimiquement compatible avec celui de la deuxième partie, de sorte à souder ensemble ces première et deuxième parties du support.

On conseille en outre:
- que lesdites parties cachées et non des marquages soient situées dans des zones différentes, non superposées, du support,
- et/ou que lesdites première et seconde parties de corps de ce support et leurs marquages soient adaptés pour que ces première et seconde parties du support, fusionnées intimement entre elles, soient inséparables, sauf à endommager ces parties du support et/ou leurs marquages,
- et/ou qu'une fois lesdites parties du support intimement liées ensemble, une partie au moins des marquages soit inaccessible, étant située à l'intérieur du support, à distance de la face extérieure de ses dites parties constituantes,
- et/ou qu'une fois le support obtenu, avec ses dites parties liées intimement entre elles, les marquages cachés et/ou de la zone du support au sein duquel ces marquages sont présents soit résistante à une modification desdits marquages, à distance de la carte, sans contact avec le corps de carte, de par la constitution et/ou l'opacité de ces parties de support et/ou de l'épaisseur de celles-ci nécessaires pour atteindre ces marquages cachés.

Si l'une au moins des parties du support est recouverte par un film de protection comme indiqué plus haut, et que l'on veut donc éviter, ou tout au moins rendre plus compliquées les tentatives de falsification des données marquées, donc globalement du support, on conseille subsidiairement que ce, ou chaque, film de recouvrement soit :
- transparent,
- et/ou en un matériau chimiquement incompatible pour être soudé avec celui/ceux des première et seconde parties du support,
- et/ou souple.

En parallèle au support, carte ou badge sécurisé qui vient d'être présenté, un autre aspect de l'invention concerne un procédé de réalisation dans lequel, on conseille :
- d'utiliser comme support au moins une première et une deuxième parties présentant une face intérieure et une face extérieure et dont on définira les caractéristiques physico-chimiques pour assurer, au sein de ce support, une liaison intime entre ces parties, au moins par leurs dites faces intérieures respectives, ainsi qu'une opacité de toutes les deux parties du support vis-à-vis de la transmission à travers elles d'un rayonnement laser susceptible de modifier ou falsifier lesdits marquages de données de personnalisation,
- à distance de la face extérieure desdites première et deuxième parties du support, de réaliser et/ou mettre en place les marquages, à l'endroit de l'une au moins de ces parties du support, ces marquages étant adaptés pour autoriser ladite liaison intime entre ces parties,
- et de conduire la liaison intime entre lesdites parties du support, cachant ainsi les marquages et protégeant ceux-ci contre une falsification ou modification laser.

En alternative, on pourra réaliser et/ou on mettre en place lesdits marquages, voire uniquement certains, à l'endroit d'une couche rapportée où sont inscrits lesdits marquages (et qui est donc, pour cela, transparente et/ou réactive à un faisceau laser et/ou adaptée au marquage D2T2 et/ou jet d'encre et/ou à d'autres technologies de personnalisation) et qui est en outre adaptée pour être liée intimement auxdites parties du support, entre eux, ces marquages cachés étant adaptés pour autoriser la liaison couche rapportée-parties opaques du support.

Favorablement, on conduira donc cette liaison intime par soudage et/ou collage en ayant adapté le/les matériaux et les marquages pour que cette liaison intime consiste donc en une soudure et/ou un collage rendant impossible la séparation des parties (15a,15b) constituant le corps de carte.

S'il y a soudage, celui-ci sera de préférence opéré par réaction chimique entre le/les matériau(x), et donc sans apport de composition fusible additionnelle.

Par ailleurs pour la protection recherchée de la carte, on conseille donc de choisir :
- la constitution,
- et/ou l'épaisseur desdites parties du support nécessaire pour atteindre une partie au moins des marquages cachés de personnalisation,
- et/ou l'opacité de ces parties du support à la pénétration d'au moins un rayon lumineux, tel en particulier donc qu'un faisceau laser, susceptible de modifier ou d'altérer ces marquages cachés,
   pour qu'une fois le support assemblé, avec lesdits marquages cachés intégrés en son sein, ce support résiste à une modification et/ou à une altération, par ledit rayon lumineux, de ses marquages cachés.

La référence faite ci-avant laser provient de ce qu'il s'agit typiquement là d'une source actuellement utilisée pour frauder, ou tenter de le faire, en particulier sur les cartes d'identité, badges sécurisés, et passeport.

Or avec les solutions ici présentées, on va pouvoir résister à ces fraudes, quelles que soient leur origine, que ce soit en cherchant à atteindre mécaniquement la zone de marquage des données de personnalisation, par tentative de délamination des parties du support concerné, découpage...., ou encore par une approche à distance, via des rayons lumineux, tel qu'un faisceau laser comme précité, ou encore dans le domaine de l'infrarouge ou de l'ultraviolet, avec en particulier certaines encres spécifiques de marquage.

Par souci d'information encore plus détaillée, on va maintenant fournir des détails complémentaires de réalisation, à titre d'exemples non limitatifs et en relation avec des dessins fournis à titre uniquement illustratifs et dans lesquels :
- la figure 1 illustre schématiquement une possible réalisation d'une carte ou d'un badge, selon un art antérieur connu,
- la figure 2 montre la possibilité de contrefaire la carte ou le badge de la figure 1, conformément à l'art antérieur,
- la figure 3 montre la manière de réaliser le corps de carte selon l'invention et montre également d'une part des informations visibles uniquement en lumière particulière (ici lumière à contre-jour, (en haut à droite), ou en « lumière normale » par réflexion (en bas à droite).
- la figure 4 schématise une tentative de contrefaçon de la carte de la figure 3, en illustrant le résultat obtenu qui montre le caractère décelable de cette tentative et donc la sécurité de la carte, et
- les figures 5, 6 et 7 montrent en coupe transversale et en éclaté chacune une carte ou feuille support de données sécurisée conformément à ce qui est ici préconisé.

Dans ce qui suit le support de données est une carte, ici une carte d'identité, plutôt rigide. Ceci n'est pas limitatif. Ce pourrait être une feuille souple de passeport, ou autre.

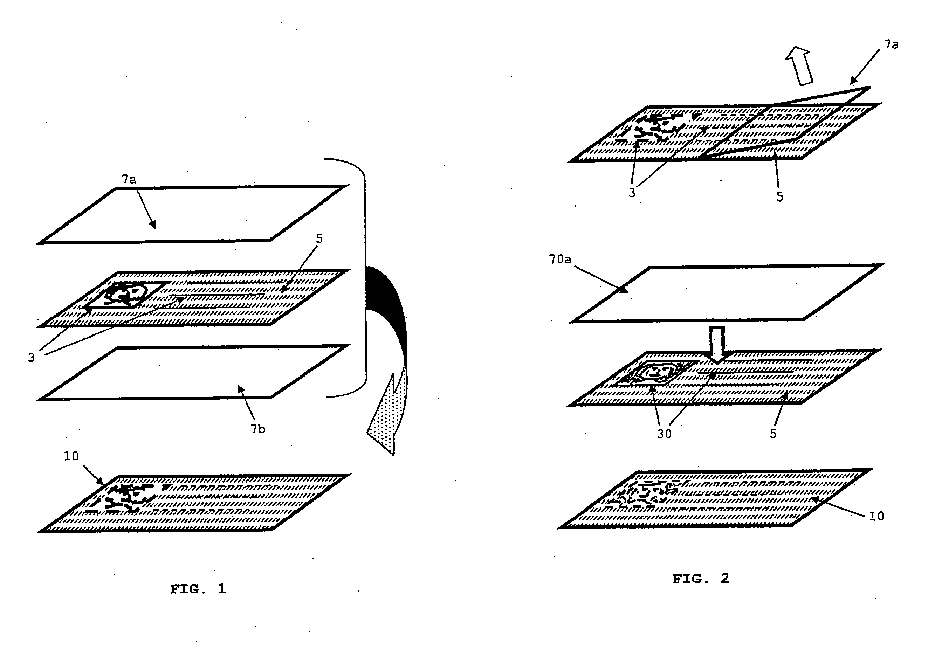

Sur la figure 1, on voit donc en 10 une carte ou un badge portant des données de personnalisation 3 marquées en elle ou sur elle.

Ces données identifient son porteur et sont donc personnelles à l'individu porteur régulier de cette carte.

La carte 10 ainsi personnalisée peut avoir été réalisée à partir d'un corps de carte 5 relativement rigide sur les deux faces opposées duquel ont été placés un film de recouvrement supérieur 7a et un film de recouvrement inférieur 7b.

Typiquement, l'assemblage de ces trois éléments 5, 7a, 7b a été réalisé par laminage à chaud.

Préalablement à cela, le marquage de personnalisation 3 a été réalisé sur l'une au moins des faces du corps de carte 5, par exemple par le dépôt d'une encre ou de tout pigment de type marquage approprié.

Typiquement, le corps de carte 5 peut être en PVC (polychlorure de vinyl), PC (polycarbonate) ou encore PET (polyester).

Il s'agit habituellement d'une matière relativement opaque à la lumière solaire.

Les films de recouvrement 7a, 7b sont typiquement transparents, souples, en plastique, tel que PVC.

Les matériaux de ces deux films 7a, 7b et du corps de carte 5 sont différents et habituellement une colle, par exemple thermosensible, permet de fixer ces éléments ensemble. Une fois la lamination à chaud intervenue, on obtient donc la carte unitaire 10.

La figure 2 montre qu'une délamination d'une telle carte est possible : on peut arriver à peler en particulier l'un des films, tel que 7a, et à le retirer du corps de carte 5.

Un faussaire a alors accès à la partie 3 marquée de la carte. Par des moyens, tels qu'une attaque chimique, ou un rayon laser, il peut supprimer ou effacer, ou encore remplacer, tout ou partie de ces marquages de personnalisation 3.

Si le film retiré portait certaines informations ou données, il peut à volonté les modifier, en reprendre une partie, falsifier le reste... sur un nouveau film 70a.

Ce nouveau film 70a, vierge ou non de marquage et qui peut être identique au film 7a, est alors replacé sur le corps de carte 5, porteur si nécessaire des nouveaux marquages 30 qui peuvent, si on l'a souhaité, personnaliser maintenant différemment la carte 10.

Une fois le film 70a fixé au corps 5, la nouvelle carte 10 modifiée et a priori falsifiée peut paraître, comme montré en bas à droite figure 2, aussi vraie que l'originale authentique, en bas à gauche figure 1.

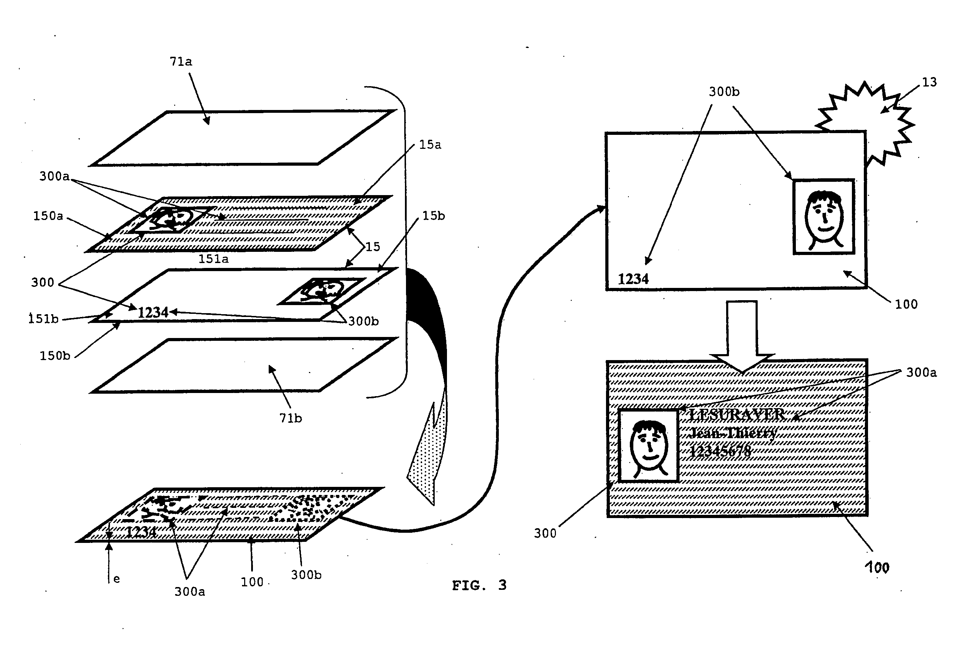

Une illustration d'une solution visant à éviter une telle situation apparaît figure 3.

Sur cette figure 3, le corps de carte, ou support, 15 est en plusieurs parties, dans un sens de l'épaisseur. Ici, il comprend deux parties 15a, 15b. Ces deux parties définissent chacune une couche d'épaisseur moindre par rapport à celle e totale, du corps 15 formé par l'assemblage, face intérieure contre face intérieure (151a, 151b), des deux dites parties.

Ces deux parties, ou sous-couches, 15a, 15b peuvent être en plastique rigide ou semi-rigide.

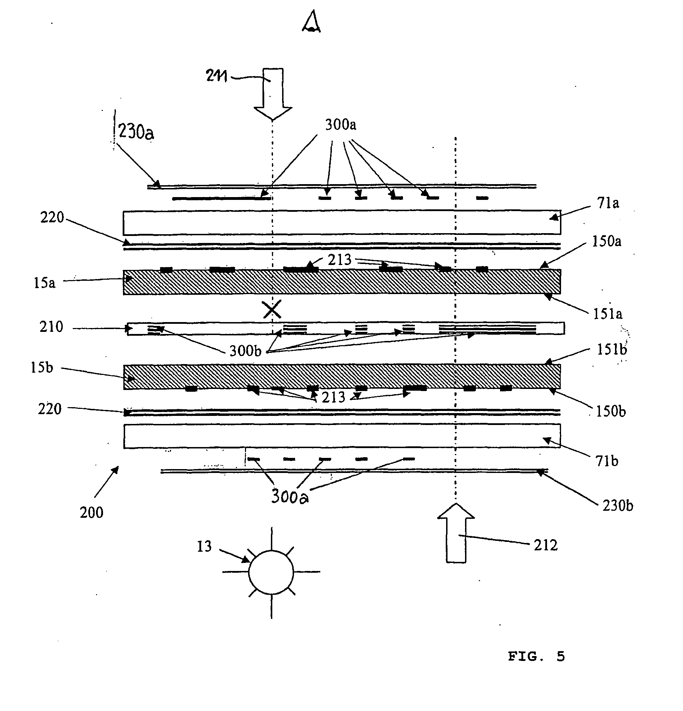

Il s'agit favorablement d'un même matériau ou de matériaux chimiquement compatibles pour être soudés, directement ou indirectement (voir figure 5), à une température de fusion a priori commune.

La liaison intime entre les deux parties 15a, 15b ne nécessite pas ici de matériau d'apport, ce qui réduit a priori à néant les risques de délamination ou de séparation forcée entre elles, une fois ces parties assemblées.

Préalablement à cet assemblage, l'une au moins des parties 15a, 15b va recevoir les marquages de personnalisation 300 requis, propres au porteur de la carte (code, numéro (s) d'identification, photographie...).

Une partie au moins de ces marquages sera réalisée à l'écart de la face extérieure 150a, 150b des parties de corps de carte 15a, 15b, et sera alors cachée une fois la carte, ou plus généralement le support concerné, assemblé(e).

Ceci est vrai ici pour la portion 300b de ces marquages qui n'est a priori visible à l'oeil que dans des conditions particulières de révélation. En effet, on voit en haut à droite figure 3 que c'est par transparence qu'un éclairage arrière par une lumière 13 révèle les marquages 300b de la carte 100, à travers les deux parties de carte 15a, 15b, alors qu'ils n'apparaissent pas à la vue sous un éclairage « normal », par réflexion, en bas à droite de la même figure 3.

Cet « éclairage normal », qui ne révèle de préférence que la portion 300a des marquages de personnalisation, est ici la lumière visible, lumière solaire ou équivalente, via une lampe.

C'est l'absence d'un éclairage arrière 13 approprié qui empêche alors de voir, ou maintient caché à la vue, les marquages 300b.

La lumière 13 peut donc être une lumière visible, telle que la lumière solaire.

Ainsi, on peut imaginer que le seul fait de placer la carte 100 à contre-jour révélera les marquages cachés 300b, les marquages extérieurs 300a pouvant, quant à eux, être révélés en permanence, au jour de façon générale ou dans le spectre solaire, et en particulier dans les deux situations de réflexion et de transparence précitées.

Eventuellement, une révélation dans d'autres conditions d'éclairage de la portion cachée 300b des marquages pourrait être prévue : forte intensité lumineuse, longueur(s) d'ondes non visible(s) à l'oeil humain, donc hors du spectre de la lumière solaire...

Mais le contre-jour, ou autrement dit la révélation par transparence, au jour, à travers les couches constitutives de la carte 100, est a priori privilégié, en particulier par soucis de facilité de réalisation de la carte et d'utilisation pour contrôle de son authenticité.

Pour obtenir cet effet préféré de révélation sélective au moins des marquages cachés 300b, on choisira la constitution structurelle, en particulier chimique, et l'épaisseur desdites parties de corps de carte 15a, 15b, nécessaires pour atteindre ces marquages, ainsi que l'opacité de ces mêmes parties de corps de carte à la pénétration d'un rayon lumineux susceptible de modifier ou d'altérer ces marquages (tel qu'un rayon laser), de telle sorte que les parties de corps de carte 15a, 15b, alors intimement liées entre elles comme précité, résistent à une modification et/ou une altération desdits marquages 300b par ce rayon lumineux.

En parallèle, on s'assurera toutefois que les caractéristiques de réalisation de ces parties de support (corps de carte), ainsi que les marquages en eux-mêmes, permettent la visualisation de ces derniers dans les conditions dont on a déjà parlé.

Ainsi, on permettra la visualisation des marquages de personnalisation 300 dans les conditions prévues et on empêchera la fraude, en rendant difficile (et de préférence impossible) l'accès à certains au moins desdits marquages (au moins les marquages cachés précités 300b visibles sélectivement) pour éviter donc qu'ils puissent être falsifiés, en liaison typiquement avec une suppression préalable des marquages authentiques, notamment par une attaque à distance par voie lumineuse, typiquement par un rayonnement laser.

On obtiendra le meilleur effet recherché en jouant :
- sur la localisation des zones de.marquage 300a, 300b (face intérieure et/ou extérieure, voire éventuel positionnement en profondeur),
- sur le choix du ou des matériau (x) des parties de carte, ainsi que de celui ou ceux des marquages (pigments, encre...),
- et, en liaison avec ce qui précède, sur les caractéristiques d'épaisseur(s) et d'opacité(s) desdites parties de corps de carte.

Tout ou partie des marquages de personnalisation 300 seront typiquement réalisés par des pigments ou une encre d'impression, tel que par la technique D2T2 (Dye Diffusion Thermal Transfer-transfert thermique par diffusion de teinte) jet d'encre ou laser, a priori avant que lesdites parties de corps de carte 15a, 15b soient assemblées entre elles, ce qui permettra en particulier de marquer la face intérieure 150a et/ou 150b, rendant ainsi d'autant plus difficile la falsification ultérieure, dès lors que lesdites parties du corps de carte sont prévues pour être ensuite indissociables et que leurs épaisseurs et caractéristiques propres forment obstacles aux attaques extérieures connues.

Dans l'exemple illustré, les marques 300a visibles en permanence à la lumière solaire ont été réalisées sur la face extérieure 150a de la partie 15a du corps de carte, tandis que les marquages cachés, de sécurité, à révélation sélective 300b ont été réalisés vers la face intérieure 151b de la deuxième partie 15b du corps de carte, ici sur cette face intérieure 151b.

Si, comme cela est typiquement le cas avec les encres actuelles de marquage, la/les matière(s) de marquage interfère(nt) de façon néfaste avec la liaison intime à obtenir entre les parties de corps de carte 15a, 15b, on prendra soin de limiter l'importance (l'étendue et/ou la densité) des marquages de surface, à l'interface entre ces deux parties 15a, 15b, c'est-à-dire l'endroit des faces intérieures 151a, et/ou 151b, ou à proximité immédiate d'elles, en profondeur.

Pour la sécurité globale, et en particulier pour les cartes et badges de sécurité, on rappelle toutefois la préférence à ce que l'ensemble, ou du moins la majorité, des marquages 300 de personnalisation, soit du côté, ou à proximité, de la face intérieure 151a, 151b desdites parties 15a, 15b.

Sur la figure 3, en haut à droite, on voit donc les données de personnalisation 300b qui apparaissent sous la lumière sélective retenue.

Bien qu'on ne l'ait pas fait figurer, les autres marquages 300a peuvent à ce moment apparaître également, puisque les caractéristiques de réflexion de la carte 100 (authentique) existent, ainsi qu'on peut le voir en bas à droite sur cette même figure 3.

En d'autres termes, dans l'exemple illustré, et une fois la carte 100 fabriquée et prête à être utilisée:
- soit on regarde la carte « normalement », typiquement à la lumière solaire et hors des conditions particulières d'apparition des marquages cachés, complémentaires de sécurité 300b, comme c'est le cas en bas à droite de cette figure, et alors seuls les marquages 300a apparaissent,
- soit on illumine la carte de la façon sélective retenue (comme par la lumière arrière 13), et alors on révèle au moins lesdits marquages cachés de sécurité 300b, comme montré en haut à droite sur la figure 3, les deux marquages 300a, 300b apparaissant alors.

Pour certaines contraintes de fabrication et pour une facilité d'utilisation du support concerné, les première et seconde parties 300a, 300b des marquages 300 seront situées dans deux zones différentes, non superposées de la carte, comme c'est le cas sur l'illustration de la figure 3.

Concernant les marquages 300, on notera encore que, comme élément de vérification de l'authenticité, on conseille l'utilisation d'un code (voir code n°1234 en haut à droite sur la figure 3) et d'au moins un élément commun entre les parties de marquage 300a, 300b, telle qu'une photographie du porteur authentique de la carte (voir à nouveau figure 3), ou encore une signature ou un numéro enregistré et contrôlé de carte.

Eventuellement, la carte sécurisée 100 comprendra, outre lesdites parties 15a,15b de support à épaisseur, opacité et constitution sélectives, au moins un film ou une couche complémentaire de recouvrement 71a et/ou 71b (figure 3) appliqué(e) et fixé(e) sur la face extérieure 150a, 150b du corps de carte 15 assemblé.

Ces films 71a et/ou 71b pourront être identiques aux films précités 7a, 7b, 70a. Ils seront donc typiquement transparents aux rayonnements lumineux évoqués ci-avant, pour les lectures considérées, par réflexion et/ou par transparence, seront typiquement en matière plastique souple et donc a priori dans un matériau différent de celui des parties précitées du corps de carte 15.

Ici, chacun de ces films 71a, 71b prévus sur les deux faces extérieures opposées du corps de carte 15 est dépourvu de marquages de données ou d'informations.

Toutefois, l'un au moins pourrait porter de tels marquages, étant donné que leur falsification n'est pas censée pouvoir interférer avec les marquages précités de personnalisation 300b inscrits au coeur même du corps de carte 15 et inaccessibles, donc infalsifiables.

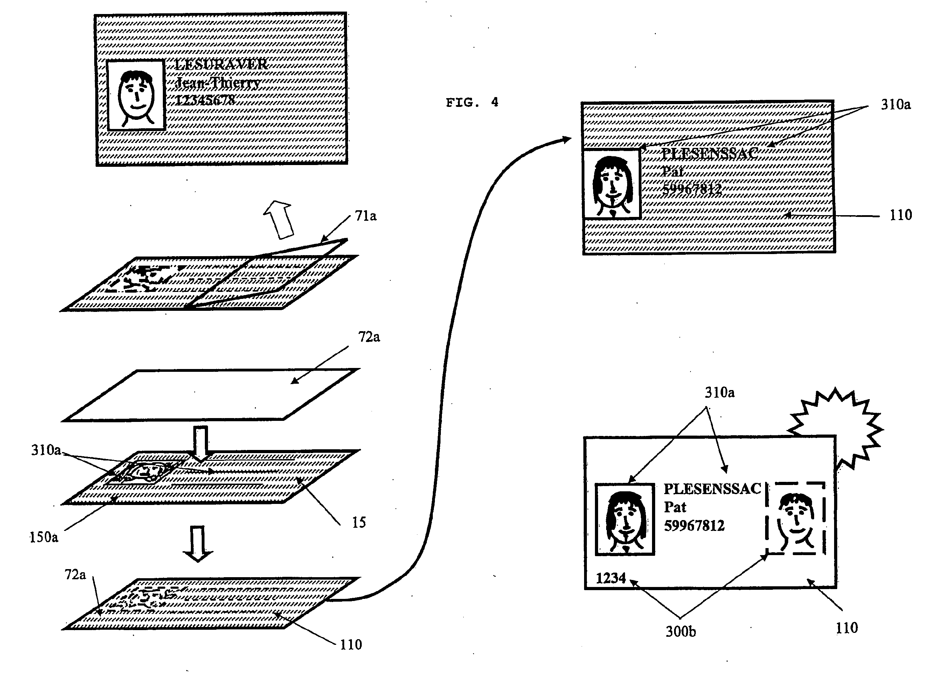

Sur la figure 4, le film ou la pellicule 71a, non intimement lié au corps de carte 15 (bien entendu déjà assemblé) est pelé frauduleusement.

En remplacement de ce film 71a, un nouveau film 72a est utilisé et fixé sur la face extérieure correspondante. Ici, il s'agit de la face 150a dont on a par exemple retiré les marquages 300a, à supposer, comme dans l'exemple illustré sur la figure 3 à gauche, que ces marquages ont été préalablement réalisés sur cette surface par une encre d'impression susceptible d'être attaquée par des moyens d'attaque connus, tels qu'un faisceau laser, une érosion chimique....

Dans cette hypothèse, le faussaire a pu choisir de marquer de nouveau (en 310a) ladite surface 150a, avant de replacer la pellicule protectrice transparente souple 72a, avec des marquages de substitution propres au porteur de la carte (code, numéro(s) d'identification, photographie...), tels que ceux figurés en haut à droite de la figure 4, ces marquages de substitution 310a remplaçant alors, de manière apparemment non décelable, les marques initiales authentiques 300a (voir figure 3 en bas à droite, ou à gauche).

Une fois fixée la pellicule 72a, le faussaire obtient donc la carte falsifiée 110 en bas à gauche ou en haut à droite de la figure 4, sur laquelle on voit par réflexion, sous un éclairage normal par la lumière solaire ou équivalent, non plus les informations 300a d'origine de la carte 100 de la figure 3 en bas à droite, mais les informations contrefaites de la carte en haut à droite de la figure 4.

Par contre, si cette carte 110 est regardée sous la lumière sélective de révélation des marquages cachés de sécurité 300b, alors on voit, en bas à droite sur la figure 4, qu'apparaît dans cet exemple à la fois les informations de marquage falsifiées 300a et les informations de marquage authentiques 300b qui révèlent donc la falsification de la carte 110.

En termes de matériaux pour chaque partie 15a, 15b de corps de carte, on pourra choisir en particulier dans la liste précitée (PET, PVC, PC et autres dérivés); mais on obtient aussi de bons résultats avec de l'ABS (acrylonitrile de butadiène et de styrène), sans adjonction pour la soudure, ou encore du papier, de préférence avec de la colle.... Pour le/les film(s) 7a, 7b, 71a, 72a, on peut en particulier choisir du PET, PVC, PC et autres dérivés.

De préférence, l'épaisseur du corps de carte 15 sera comprise entre 0,05 mm et 10 mm, et encore préférentiellement entre 0,1 mm et 1 mm. Chaque partie 15a, 15b pourra être d'épaisseur moitié.

Pour l'équilibre entre l'opacité, pour la lecture par réflexion, et la transparence, notamment pour la révélation à contre-jour, quelques essais permettront d'arriver au bon choix, en particulier sous la lumière solaire.

Certaines au moins des parties (15a, 15b) du corps de carte, voire du/des film(s), pourront en outre porter, en particulier intégrer, des éléments de sécurité complémentaires tels qu'un guillochage, des irisations, des moyens holographiques, filigrane (s).... Mais ces éléments ne sont pas ici considérés comme des marquages de données de personnalisation (voir ci-après).

Figure 5, le support de données 200 comprend les première et une deuxième parties précitées 15a,15b entre les faces intérieures cachées (151a,151b) desquelles est interposée une couche rapportée 210 qui a reçu les marquages cachés de données de personnalisation 300b (noir de carbone incorporé dans un film PVC, PET ou polycarbonate, en particulier). Ces marquages peuvent avoir été réalisés, avant assemblage des couches, par gravage laser au coeur de cette couche 210, donc à distance de ses surfaces. Un marquage en surface est aussi envisageable, éventuellement par une autre technique connue.

Outre qu'elle est adaptée pour être liée intimement auxdites parties 15a,15b du support (même matière ou compatibilité chimique pour un soudage), a priori sans matériau d'apport, la couche 210 sera alors réactive, donc adaptée, au marquage laser et/ou D2T2 et/ou jet d'encre et/ou autre technologie de personnalisation. Elle pourra en outre être transparente notamment à la lumière solaire.

Les parties 15a,15b sont par contre opaques à un (tout) faisceau laser, de manière à empêcher qu'on puisse ainsi atteindre la couche cachée 210, une fois les éléments 15a,15b,210 assemblés intimement entre eux. Cette opacité sera par ailleurs telle que, au moins sous lumière solaire, les marquages cachés 300b ne seront pas visibles par réflexion (flèche 211), tout en étant par contre révélés par transparence (flèche 212, éclairage arrière 13).

Côté face extérieure 150a,150b tournée vers l'environnement extérieur, les parties 15a,15b ont reçu, ou portent de fabrication, des éléments de sécurité, tels que guilloches 213. On pourrait aussi trouver des marquages «apparentes» 300a (non figurés). Par-dessus, est appliquée une couche de liaison 220, telle en particulier qu'un adhésif, pour la fixation, ici de chaque côté, d'un film de protection 71a,71b transparent.

Encore plus extérieurement, on trouve un film transparent 230a,230b, typiquement encore plus fin.

Interposées entre, on voit des données de personnalisation apparentes 300a.

Typiquement, le/chaque film transparent 230a,230b sera collant pour adhérer à la face extérieure du film de protection 71a,71b correspondant, protégeant ainsi les des données de personnalisation apparentes 300a.

Ci-avant, on devra comprendre «transparent » comme se laissant traverser par la lumière solaire. Ainsi, sous cette lumière, on pourra voir:
- par réflexion les données marquées 300a et a priori les éventuels autres éléments de sécurité précités (tels que 213),
- et, par transparence, les marquages cachés.

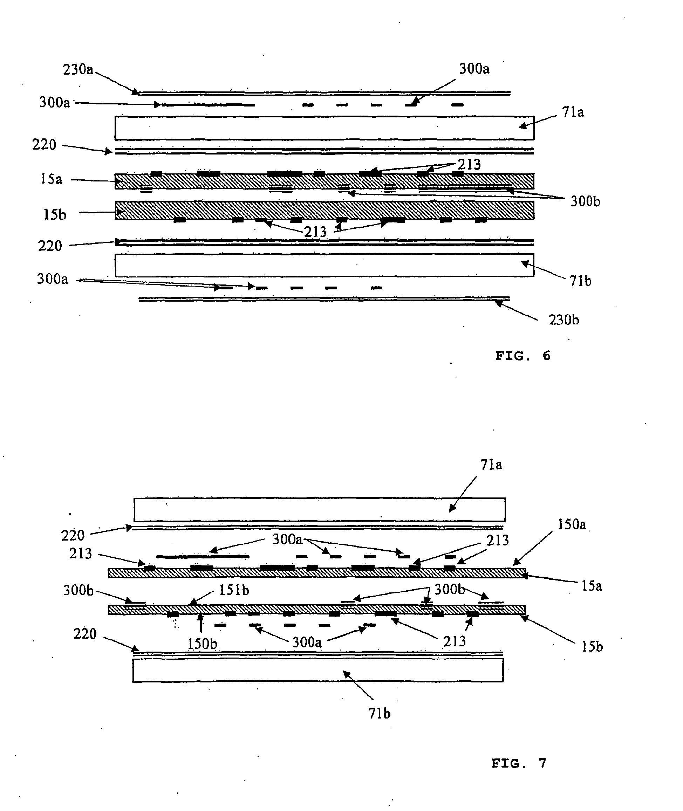

Figure 6, on retrouve les couches, éléments et marquages de la fig.5, sauf la couche cachée 210, de coeur. Les marquages cachés 300b sont inscrits directement à l'endroit de (sur ou dans) l'une au moins des parties opaques 15a,15b, ici à l'interface, sur la partie 15a.

Figure 7, c'est comme sur la fig.6, hormis le fait que les marquages apparents de données de personnalisation 300a sont interposés entre chaque partie 15a,15b du support et une couche de liaison 220 correspondante, elle-même interposée entre la partie 15a,15b concernée et le film de protection 71a,71b correspondant. En outre, les marquages 300a ont été inscrits sur la face extérieure 150a,150b de la partie 15a,15b concernée, par-dessus les éléments de sécurité 213 déjà formés sur cette face. Si la cohésion ou l'adhésion est adaptée, on pourrait se passer des couches de liaison 220.

Figures 6 et 7, les conditions de révélation schématisées fig.5 par les flèches 211, 212 démeurent, de préférence.

## Revendications

1. Support de données comprenant au moins une première et une deuxième parties (15a, 15b) assemblées entre elles, chacune présentant une face extérieure tournée vers l'environnement extérieur et une face intérieure (151a,151b) cachée, l'une au moins de ces première et deuxième parties portant, à distance desdites faces extérieures, des marquages cachés de données de personnalisation (300,300b), lesdites première et seconde parties du support étant toutes deux opaques vis-à-vis de la transmission à travers elles d'un rayonnement laser susceptible de modifier lesdits marquages cachés.

2. Support de données selon la revendication 1,
**caractérisé en ce que** les marquages (300,300b) et ce support, ou au moins lesdites première et deuxième parties (15a,15b) de celui-ci, présentent une certaine opacité à la lumière naturelle et sont adaptés pour que, sous cette lumière naturelle, une partie au moins desdits marquages cachés ne soit pas visible par réflexion, mais soit par contre visible par transparence à travers le support.

3. Support de données selon la revendication 1 ou 2, **caractérisé en ce qu'**il comprend en outre d'autres marquages de données de personnalisation (300a) visibles par réflexion sous lumière naturelle.

4. Support de données selon la revendication 1,
**caractérisé en ce qu'**il comprend une première partie (300a) de marquages de données de personnalisation, inscrite dans ou sur ce support, et visible, depuis l'environnement extérieur et par l'oeil humain, par réflexion sous une première lumière visible, et une deuxième partie (300b) de marquages de données de personnalisation, qui correspond auxdits marquages cachés, et qui est visible, toujours depuis l'environnement extérieur et par l'oeil humain, par transparence à travers le support et/ou sous une seconde lumière spécifique différente de celle qui rend visible ladite première partie des marquages, lesdites première et deuxième parties des marquages et le support, ou au moins les première et/ou deuxième parties de celui-ci (15a,15b), présentant une opacité à l'éclairage concerné adaptée pour cela.

5. Support de données selon la revendication 4,
**caractérisé en ce que** lesdites première et seconde parties des marquages (300a,300b) sont situées dans deux zones différentes, non superposées, du support.

6. Support de données selon l'une quelconque des revendications précédentes, **caractérisé en ce que** les marquages de données de personnalisation et/ou les matériaux esdites première et deuxième parties (15a,15b) du support sont adaptées pour que cesdites première et deuxième parties soient soudées intimement l'une à l'autre du côté de leurs dites faces intérieures respectives.

7. Support de données selon l'une quelconque des revendications précédentes, **caractérisé en ce que**:
- le matériau de la première partie ou de la deuxième partie (15a,15b) de ce support présente sensiblement la même température de fusion que celui de l'autre partie de corps de carte,
- et/ou le matériau de la première partie du support est identique ou chimiquement compatible avec celui de la deuxième partie, de sorte à souder ensemble ces première et deuxième parties du support.

8. Support de données selon l'une quelconque des revendications précédentes, **caractérisé en ce qu'**il comprend en outre au moins un film (71a,71b,230a,230b) recouvrant la face extérieure de l'une au moins des dites première et deuxième parties du support, ce ou chaque film de recouvrement étant:
- transparent,
- et/ou en un matériau chimiquement incompatible pour être soudé avec celui/ceux des première et seconde parties du support,
- et/ou souple.

9. Support de données selon l'une quelconque des revendications précédentes, **caractérisé en ce que** lesdites première et seconde parties (15a,15b) du support et leurs marquages (300) sont adaptés pour que ces première et seconde parties soient inséparables, car fusionnées intimement entre elles, sauf à endommager lesdites parties du support et/ou leurs marquages.

10. Support de données selon l'une quelconque des revendications précédentes, **caractérisé en ce que** les marquages cachés de données de personnalisation (300b) sont portés par l'une au moins desdites première et deuxième parties (15a,15b) du support par l'intermédiaire d'une couche intérieure cachée (210), où sont inscrits lesdits marquages et qui est transparente et/ou réactive à un faisceau laser et/ou adaptée au marquage D2T2 et/ou jet d'encre et/ou à d'autres technologies de personnalisation.

11. Pièce d'identité électronique, telle que carte d'identité ou feuille d'un passeport, comprenant le support (110) de données selon l'une quelconque des revendications précédentes.

12. Procédé pour réaliser un support de données portant des marquages de données de personnalisation,
**caractérisé en ce que**:
- on utilise comme support au moins une première et une deuxième parties (15a,15b) présentant une face intérieure et une face extérieure et dont on définit les caractéristiques physico-chimiques pour assurer, au sein de ce support, une liaison intime entre ces parties, par leurs dites faces intérieures respectives (151a,151b), ainsi qu'une opacité de toutes les deux parties du support vis-à vis de la transmission à travers elles d'un rayonnement laser susceptible de modifier ou falsifier lesdits marquages de données de personnalisation,
- à distance de la face extérieure desdites première et deuxième parties du support, on réalise et/ou on met en place les marquages (300,300b), à l'endroit de l'une au moins de ces parties du support, ces marquages étant adaptés pour autoriser ladite liaison intime entre ces parties,
- et on conduit la liaison intime entre lesdites parties du support, cachant ainsi les marquages et protégeant ceux-ci contre une falsification ou modification laser.

13. Procédé pour réaliser un support de données portant des marquages de données de personnalisation, **caractérisé en ce que**:
- on utilise comme support au moins une première et une deuxième parties (15a,15b) présentant une face intérieure et une face extérieure et dont on définit les caractéristiques physico-chimiques pour assurer, au sein de ce support, une liaison intime entre ces parties, par leurs dites faces intérieures respectives (151a,151b), ainsi qu'une opacité de toutes les deux parties du support vis-à-vis de la transmission à travers elles d'un rayonnement laser susceptible de modifier ou falsifier lesdits marquages de données de personnalisation,
- à l'endroit d'une couche rapportée (210), qui est transparente et/ou réactive à un faisceau laser et/ou adaptée au marquage D2T2 et/ou jet d'encre et/ou à d'autres technologies de personnalisation et qui est en outre adaptée pour être liée intimement auxdites parties du support, on réalise et/ou on met en place lesdits marquages (300,300b), lesquels sont adaptés pour autoriser ladite liaison intime,
- et on conduit la liaison intime desdites parties du support et de la couche rapportée, cachant ainsi lesdits marquages et protégeant ceux-ci contre une falsification ou modification laser.

14. Procédé selon la revendication 12 ou 13,
**caractérisé en ce qu'**on conduit ladite liaison intime par soudage et/ou collage en ayant adapté le/les matériaux et les marquages pour que cette liaison intime consiste donc en une soudure et/ou un collage rendant impossible la séparation des parties (15a, 15b) constituant le corps de carte.

15. Procédé selon la revendication 14, **caractérisé en ce que** qu'on conduit ladite liaison intime par soudage et la soudure est opérée par réaction chimique entre le/les matériau(x) qui sont compatible(s) entre eux, et donc sans apport de composition fusible additionnelle.

## Claims

1. A data medium including at least a first and a second part (15a, 15b) assembled together, with each one having an external face turned towards the external environment and a hidden internal face (151a, 151b), at least one of such first and second parts bearing at a distance from said external faces, hidden marks of customization data (300, 300b), said first and second parts of the medium being both opaque as to the transmission therethrough of a laser radiation liable to modify said hidden marks.

2. A data medium according to claim 1,
**characterised in that** the marks (300, 300b) and this medium, or at least said first and second parts (15a, 15b) thereof are somewhat opaque and are adapted so that, in daylight, at least a part of said hidden marks are not visible by reflection but are at least visible by transparency through the medium.

3. A data medium according to claim 1 or 2, **characterised in that** it further includes other customization data marks (300a) visible by reflection in daylight.

4. A data medium according to claim 1,
**characterised in that** it includes a first part (300a) of customization data marks, inscribed in or on this medium and visible from the external environment and by a human eye by reflection in a first visible light, and a second part (300b) of customization data marks which corresponds to said hidden marks and which is still visible from the external environment and by a human eye by transparency through the medium and/or in a second specific light different from that which makes said first part of the marks visible, with said first and second parts of the marks and the medium or, at least, the first and/or second parts thereof (15a, 15b), being opaque in the concerned lighting adapted therefor.

5. A data medium according to claim 4,
**characterised in that** said first and second parts of the marks (300a, 300b) are positioned in two different, not superimposed, areas of the medium.

6. A data medium according to any one of the preceding claims, **characterised in that** the customization data marks and/or the material of said first and second parts (15a, 15b) of the medium are adapted so that such first and second parts are closely welded to each other on the side of said respective internal faces.

7. A data medium according to any one of the preceding claims, **characterised in that**:
- the material of the first part or of the second part (15a, 15b) of such medium has substantially the same melting temperature as that of the other part of the card body,
- and/or the material of the first part of the medium is identical or chemically compatible with that of the second part, so that such first and second parts of the medium can be welded together.

8. A data medium according to any one of the preceding claims, **characterised in that** it further includes at least a film (71a, 71b, 230a, 230b) covering the external face of at least one of said first and second parts of the medium, such or each covering film being:
- transparent,
- and/or made of a material chemically incompatible to be welded with that/those of the first and second parts of the medium,
- and/or flexible.

9. A data medium according to any one of the preceding claims, **characterised in that** said first and second parts (15a, 15b) of the medium and the marks thereof (300) are adapted so that such first and second parts cannot be separated because they are closely melted together, unless said parts of the medium and/or the marks thereof are damaged.

10. A data medium according to any one of the preceding claims, **characterised in that** the customization data hidden marks (300b) are born by at least one of said first and second parts (15a, 15b) of the medium through a hidden internal layer (210), wherein said marks are inscribed and which is transparent and/or reactive to a laser radiation and/or adapted to marking D2T2 and/or ink jet and/or other customization technologies.

11. An electronic identification paper such as an identity card or a passport sheet including the data medium (110) according to any one of the preceding claims.

12. A method for producing a data medium bearing customization data marks **characterised in that**:
- at least a first and a second part (15a, 15b) having an internal face and an external face are used as a medium the physico-chemical characteristics of which are defined to provide within this medium a close binding of such parts by said respective internal faces (151a, 151b) as well as an opacity of both parts of the medium to the transmission therethrough of a laser radiation liable to modify or forge said customization data marks,
- at a distance from the external face of said first and second parts of the medium, the marks are made and/or placed (300, 300b) on at least one of such medium parts, such marks being adapted to allow said close binding of such parts,
- and the close binding of said parts of the medium is provided, thus hiding the marks and protecting those against a forgery or a modification with the laser.

13. A method for producing a data medium bearing customization data marks, **characterised in that**:
- at least a first and a second part (15a, 15b) having an internal face and an external face are used as a medium the physico-chemical characteristics of which are defined to provide within this medium a close binding between such parts by said respective internal faces (151a, 151b) as well as the opacity of both parts of the medium to the transmission therethrough of a laser radiation liable to modify or forge said customization data marks,
- at the location of a deposited layer (210) which is transparent and/or reactive to a laser beam and/or adapted to marking D2T2 and/or ink jet and/or other customization technologies and which is further adapted to be closely bound to said parts of the medium, said marks (300, 300b) which are adapted to allow said close binding, are provided and/or positioned,
- and the close binding of said parts of the medium and the deposited layer is provided, thus hiding said marks and protecting those against forgery or a modification with the laser.

14. A method according to claim 12 or 13,
**characterised in that** said close binding is provided by welding and/or gluing, with the material or materials and the marks having been adapted so that such close binding thus consists in welding and/or gluing making it impossible to separate the parts (15a, 15b) composing the card body.

15. A method according to claim 14, **characterised in that** said close binding is provided by welding and the welding is provided by a chemical reaction between the material or materials which is/are compatible with each other and thus without any addition of a fusible composition.

## Patentansprüche

1. Datenträger, der mindestens einen ersten und einen zweiten Teil (15a, 15b) umfasst, die untereinander zusammengebaut sind, wobei jede eine äußere, zur äußeren Umgebung gerichtete Seite und eine innere (151a, 151b), verdeckte Seite umfasst, wobei mindestens eine dieser ersten und zweiten Teile entfernt von den genannten äußeren Seiten verdeckte Markierungen von Personalisierungsdaten (300, 300b) tragen, wobei die genannten ersten und zweiten Teile des Trägers alle beide gegenüber der Übertragung einer Laserstrahlung durch sie hindurch blickdicht sind, die geeignet ist, die genannten verdeckten Markierungen zu modifizieren.

2. Datenträger gemäß Anspruch 1, **dadurch gekennzeichnet, dass** die Markierungen (300, 300b) und dieser Träger oder wenigstens die genannten ersten und zweiten Teile (15a, 15b) desselben eine gewisse Blickdichte gegenüber Tageslicht aufweisen und angepasst sind, damit unter diesem Tageslicht wenigstens ein Teil der genannten verdeckten Markierungen nicht durch Reflektion sichtbar ist, jedoch per Transparenz durch den Träger hindurch sichtbar ist.

3. Datenträger gemäß Anspruch 1 oder 2, **dadurch gekennzeichnet, dass** er darüber hinaus weitere per Reflektion unter Tageslicht sichtbare Markierungen von Personalisierungsdaten (300a) umfasst.

4. Datenträger gemäß Anspruch 1, **dadurch gekennzeichnet, dass** er einen ersten Teil (300a) Markierungen von Personalisierungsdaten umfasst, der in diesen Träger oder auf diesem Träger eingetragen ist und ab der äußeren Umgebung und durch das menschliche Auge per Reflektion unter einem ersten sichtbaren Licht sichtbar ist, und einen zweiten Teil (300b) Markierungen von Personalisierungsdaten, der den genannten verdeckten Markierungen entspricht, und der ebenfalls ab der äußeren Umgebung und durch das menschliche Auge per Transparenz durch den Träger und /oder unter einem zweiten, spezifischen, Licht sichtbar ist, das von dem unterschiedlich ist, das den genannten ersten Teil der Markierungen sichtbar macht, wobei die genannten ersten und zweiten Teile der Markierungen und der Träger oder wenigstens die ersten und / oder zweiten Teile desselben (15a, 15b) eine dafür angepasste Blickdichte gegenüber der betroffenen Beleuchtung aufweisen.

5. Datenträger gemäß Anspruch 4, **dadurch gekennzeichnet, dass** die genannten ersten und zweiten Teile der Markierungen (300a, 300b) sich in zwei unterschiedlichen, nicht übereinander gelagerten Bereichen des Trägers befinden.

6. Datenträger gemäß einem der vorherigen Ansprüche, **dadurch gekennzeichnet, dass** die Markierungen von Personalisierungsdaten und / oder des Materials der genannten ersten und zweiten Teile (15a, 15b) des Trägers angepasst sind, damit diese genannten ersten und zweiten Teile auf der Seite ihrer genannten jeweiligen inneren Seiten fest miteinander verschweißt werden.

7. Datenträger gemäß einem der vorherigen Ansprüche, **dadurch gekennzeichnet, dass**:
- das Material des ersten Tels oder des zweiten Teils (15a, 15b) dieses Trägers deutlich dieselbe Schmelztemperatur aufweist wie das des anderen Teils des Kartenkörpers,
- und / oder das Material des ersten Teils des Trägers mit dem des zweiten Teils derart identisch oder chemisch kompatibel ist, dass diese ersten und zweiten Teile des Trägers miteinander verschweißt werden.

8. Datenträger gemäß einem der vorherigen Ansprüche, **dadurch gekennzeichnet, dass** er darüber hinaus wenigstens eine Folie (71a, 71b, 230a, 230b) umfasst, die die äußere Seite wenigstens eines der genannten ersten und zweiten Teile des Trägers abdecken, wobei diese oder jede Abdeckfolie:
- transparent ist
- und / oder aus einem chemisch nicht kompatiblen Material ist, um mit dem / der der ersten und zweiten Teile des Trägers verschweißt zu werden,
und / oder elastisch ist.

9. Datenträger gemäß einem der vorherigen Ansprüche, **dadurch gekennzeichnet, dass** die genannten ersten und zweiten Teile (15a, 15b) des Trägers und ihrer Markierungen (300) angepasst sind, damit diese ersten und zweiten Teile untrennbar sind, da diese fest miteinander verschmolzen sind, es sei denn, die genannten Teile des Trägers und / oder ihre Markierungen werden beschädigt.

10. Datenträger gemäß einem der vorherigen Ansprüche, **dadurch gekennzeichnet, dass** die verdeckten Markierungen von Personalisierungsdaten (300b) durch wenigstens einen der genannten ersten und zweiten Teile (15a, 15b) des Trägers über eine innere, verdeckte Schicht (210) getragen werden, auf der die genannten Hinweise eingeschrieben sind und die für ein Laserstrahlenbündel transparent und / oder reaktionsfähig sind und / oder an die Markierung D2T2 und / oder Tintenstrahl und / oder andere Technologien der Personalisierung angepasst sind.

11. Elektronischer Ausweis, wie z. B. ein Personalausweis oder die Seite eines Reisepasses, der den Datenträger (110) gemäß einem der vorherigen Ansprüche umfasst.

12. Verfahren zur Realisierung eines Datenträgers, der Markierungen von Personalisierungsdaten trägt, **dadurch gekennzeichnet, dass**:
- als Träger wenigstens ein erster und ein zweiter Teil (15a, 15b) verwendet wird, der eine innere Seite und eine äußere Seite aufweist und von dem die physikalisch-chemischen Merkmale definiert werden, um innerhalb dieses Trägers eine feste Verbindung zwischen diesen Teilen durch ihre genannten jeweiligen inneren Seiten (151a, 151b) sowie eine Blickdichte gegenüber den zwei Teilen des Trägers gegenüber der Übertragung einer Laserstrahlung durch sie hindurch zu gewährleisten, die geeignet ist, die genannten Markierungen von Personalisierungsdaten zu modifizieren oder zu verfälschen,
- entfernt von der äußeren Seite der genannten ersten und zweiten Teile des Trägers Markierungen (300, 300b) an der Stelle wenigstens eines dieser Teile des Trägers realisiert und / oder eingesetzt werden, wobei diese Markierungen angepasst sind, um die genannte feste Verbindung zwischen diesen Teilen zu erlauben,
- und es wird die feste Verbindung zwischen den genannten Teilen des Trägers durchgeführt, wobei somit die Markierungen verdeckt werden und diese vor einer Fälschung oder einer Modifizierung per Laser geschützt werden.

13. Verfahren zur Realisierung eines Datenträgers, der Markierungen von Personalisierungsdaten trägt, **dadurch gekennzeichnet, dass**:
- als Träger wenigstens ein erster und ein zweiter Teil (15a, 15b) verwendet wird, der eine innere Seite und eine äußere Seite aufweist und dessen physikalisch-chemische Merkmale definiert werden, um innerhalb dieses Trägers eine feste Verbindung zwischen diesen Teilen durch ihre genannten, jeweiligen inneren Seiten (151a, 151b) sowie eine Blickdichte der zwei Teile des Trägers gegenüber der Übertragung einer Lasterstrahlung durch sie hindurch zu gewährleisten, die geeignet ist, die genannten Markierungen von Personalisierungsdaten zu modifizieren oder zu verfälschen,
- an der Stelle einer versetzten Schicht (210), die für ein Laserstrahlenbündel transparent und / oder reaktionsfähig ist und / oder an die Markierung D2T2 und / oder Tintenstrahl und / oder andere Personalisierungstechnologien angepasst ist und die darüber hinaus angepasst ist, um fest mit den genannten Teilen des Trägers verbunden zu werden, die genannten Markierungen (300, 300b) realisiert und / oder eingesetzt werden, die angepasst sind, um die genannte feste Verbindung zu realisieren,
- und die feste Verbindung der genannten Teile des Trägers und der versetzten Schicht durchgeführt wird, wobei somit die genannten Markierungen verdeckt werden und diese vor einer Fälschung oder einer Modifizierung per Laser geschützt werden.

14. Verfahren gemäß Anspruch 12 oder 13, **dadurch gekennzeichnet, dass** die genannte feste Verbindung per Verschweißen und / oder Verkleben durchgeführt wird, indem das Material / die Materialien und die Markierungen angepasst werden, damit diese feste Verbindung damit aus einer Verschweißung und / oder einer Verklebung besteht, die die Trennung der Teile (15a, 16b) unmöglich macht, die den Kartenkörper bilden.

15. Verfahren gemäß Anspruch 14, **dadurch gekennzeichnet, dass** die genannte feste Verbindung per Verschweißen durchgeführt wird und die Verschweißung per chemischer Reaktion zwischen dem Material / den Materialien, die untereinander kompatibel sind, und damit ohne Einbringen von zusätzlichen Schmelzverbindungen durchgeführt wird.
